(19) Europäisches Patentamt European Patent Office Office européen des brevets

(11) EP 2 208 976 B1

(12) FASCICULE DE BREVET EUROPEEN

(45) Date de publication et mention
de la délivrance du brevet:
**05.10.2016  Bulletin 2016/40**

(51) Int Cl.:
***G01J 5/22*** *(2006.01)*

(21) Numéro de dépôt: **09306249.5**

(22) Date de dépôt: **17.12.2009**

(54) **Dispositif pour la détection d'un rayonnement électromagnétique**

Vorrichtung zur Erfassung von elektromagnetischer Strahlung

Device for detecting electromagnetic radiation

(84) Etats contractants désignés:
**AT BE BG CH CY CZ DE DK EE ES FI FR GB GR
HR HU IE IS IT LI LT LU LV MC MK MT NL NO PL
PT RO SE SI SK SM TR**

(30) Priorité:  **19.01.2009  FR 0950303**

(43) Date de publication de la demande:
**21.07.2010  Bulletin 2010/29**

(73) Titulaire: **ULIS**
**38113 Veurey Voroize (FR)**

(72) Inventeur: **Legras, Olivier**
**38500 VOIRON (FR)**

(74) Mandataire: **Cabinet Laurent & Charras**
**Le Contemporain**
**50 Chemin de la Bruyère**
**69574 Dardilly Cedex (FR)**

(56) Documents cités:
**EP-A- 1 211 888        EP-A- 2 012 101
US-A- 5 756 999        US-A1- 2002 074 499
US-A1- 2003 160 171**

# Description

## DOMAINE DE L'INVENTION

L'invention a trait au domaine de l'imagerie et de la pyrométrie infrarouge. Plus particulièrement, l'invention concerne la réjection de mode commun lors de la lecture de bolomètres.

## ETAT DE LA TECHNIQUE

Dans le domaine des détecteurs infrarouges, il est connu d'utiliser des dispositifs agencés sous forme matricielle, et susceptibles de fonctionner à température ambiante, c'est-à-dire ne nécessitant pas de refroidissement à de très basses températures, contrairement aux dispositifs d'imagerie appelés « détecteurs quantiques », qui eux, nécessitent un fonctionnement à très basse température, typiquement celle de l'azote liquide.

Ces détecteurs non refroidis utilisent traditionnellement la variation d'une grandeur physique d'un matériau approprié, en fonction de la température, au voisinage de 300K. Dans le cas des détecteurs bolométriques, cette grandeur physique est la résistivité électrique.

Un tel détecteur non refroidi associe généralement :

- des moyens d'absorption du rayonnement infrarouge et de conversion de celui-ci en chaleur,
- des moyens d'isolation thermique du détecteur, de telle sorte à permettre à celui-ci de s'échauffer sous l'action du rayonnement infrarouge,
- des moyens de thermométrie qui, dans le cadre d'un détecteur bolométrique, mettent en oeuvre un élément résistif, formé à partir d'électrodes et d'un matériau sensible, dit bolométrique,
- et des moyens de lecture des signaux électriques fournis par les moyens de thermométrie.

Les moyens d'absorption du rayonnement et de thermométrie sont intégrés dans une membrane suspendue par les moyens d'isolation thermique au dessus d'un substrat dans lequel sont disposés les moyens de lecture.

Les détecteurs destinés à l'imagerie infrarouge sont classiquement réalisés sous la forme d'une matrice de détecteurs élémentaires selon une ou deux dimensions, ladite matrice étant formée de manière dite « monolithique » ou reportée sur le substrat, généralement réalisé en silicium, dans lequel sont constitués des moyens d'adressage séquentiel des détecteurs élémentaires, et des moyens d'excitation électrique et de prétraitement des signaux électriques formés à partir de ces détecteurs élémentaires. Ce substrat et les moyens intégrés sont communément désignés par le terme de « circuit de lecture ».

Pour obtenir une scène par l'intermédiaire de ce détecteur, on projette la scène à travers une optique adaptée sur la matrice de détecteurs élémentaires, et des stimuli électriques cadencés sont appliqués par l'intermédiaire du circuit de lecture à chacun des détecteurs élémentaires, ou à chaque rangée de tels détecteurs, afin d'obtenir un signal électrique constituant l'image de la température atteinte par chacun desdits détecteurs élémentaires. Ce signal est traité de manière plus ou moins élaborée par le circuit de lecture, puis éventuellement par un dispositif électronique extérieur au boîtier afin de générer l'image thermique de la scène observée.

La difficulté essentielle de mise en oeuvre des détecteurs bolométriques réside dans la très faible variation relative de leur résistance électrique, représentative des variations locales de température d'une scène observée, par rapport à la valeur moyenne de ces résistances.

En effet, les lois physiques d'émission thermique dans l'infrarouge de la scène observée, et typiquement entre 8 et 14 micromètres (correspondant à la bande de transparence de l'atmosphère terrestre dans laquelle sont habituellement utilisés des détecteurs bolométriques), conduisent à une puissance différentielle $dP$ au niveau du plan focal détecteur de l'ordre de 50 $\mu W/cm^2$ lorsque la température de scène varie de 1K autour de 300K. La détermination de cette valeur est aisément à la portée de l'homme du métier, en appliquant les lois physiques précitées.

Cette estimation est valable pour une optique ouverte à f/1, une transmission élevée entre la scène et le détecteur, et lorsque le détecteur ne reçoit qu'une quantité négligeable d'énergie en dehors de la bande de longueur d'onde spécifiée, par exemple et typiquement si le boîtier est muni d'une fenêtre transparente dans cet intervalle et opaque en deçà et au-delà des limites indiquées.

Corollairement, la variation de température $d\theta$ d'un bolomètre à l'équilibre thermique, liée à une puissance infrarouge $dP$ absorbée sur sa surface $S$ est donnée par l'expression suivante :

$$d\theta = R_{th} . dP \qquad (1)$$

où $R_{th}$ est une résistance thermique entre la partie sensible du bolomètre, qui s'échauffe sous l'effet du rayonnement infrarouge, et le substrat isotherme qui le porte.

Ainsi, pour un bolomètre de dimensions typiques de l'ordre de 30$\mu$m x 30$\mu$m, ce qui représente une surface de 9.10$^{-6}$ cm$^2$, la résistance thermique typique selon l'état de la technique, est de l'ordre de 20 à 60 MK/W, ce qui conduit à un échauffement du bolomètre de l'ordre de 0,01 K à 0,03 K lorsque la température de l'élément de scène vu par ce bolomètre varie de 1 K.

Si $R_b$ désigne la résistance électrique vue entre les deux pôles d'amenée du courant au niveau du matériau sensible bolométrique, la variation de résistance $dR_b$ qui en résulte est exprimée par l'expression suivante :

$$dR_b = R_b.TCR\,.d\theta \qquad (2)$$

où *TCR* est un coefficient de variation relatif de résistance du matériau constituant la partie sensible du bolomètre au voisinage de la température de fonctionnement, classiquement voisin de -2 % par K pour les matériaux usuels dans ce domaine (oxydes de vanadium, silicium amorphe). En conséquence, la variation relative de résistance $dR/R$ consécutive à un différentiel de 1 K sur la scène est de l'ordre de 0,04%, soit $4.10^{-4}$/K.

Or, il est demandé aujourd'hui des résolutions thermiques d'imagerie nettement meilleures que 1 K, et typiquement 0,05 K, voire moins. De tels résultats peuvent être obtenus par l'élaboration de structures présentant des résistances thermiques $R_{th}$ très élevées de par la mise en oeuvre de techniques sophistiquées. Cependant le besoin demeure de mesurer d'infimes variations relatives de résistance et typiquement, ainsi qu'indiqué précédemment, de l'ordre de quelques $10^{-6}$, pour résoudre des variations temporelles et spatiales de température de quelques dizaines de milliKelvin.

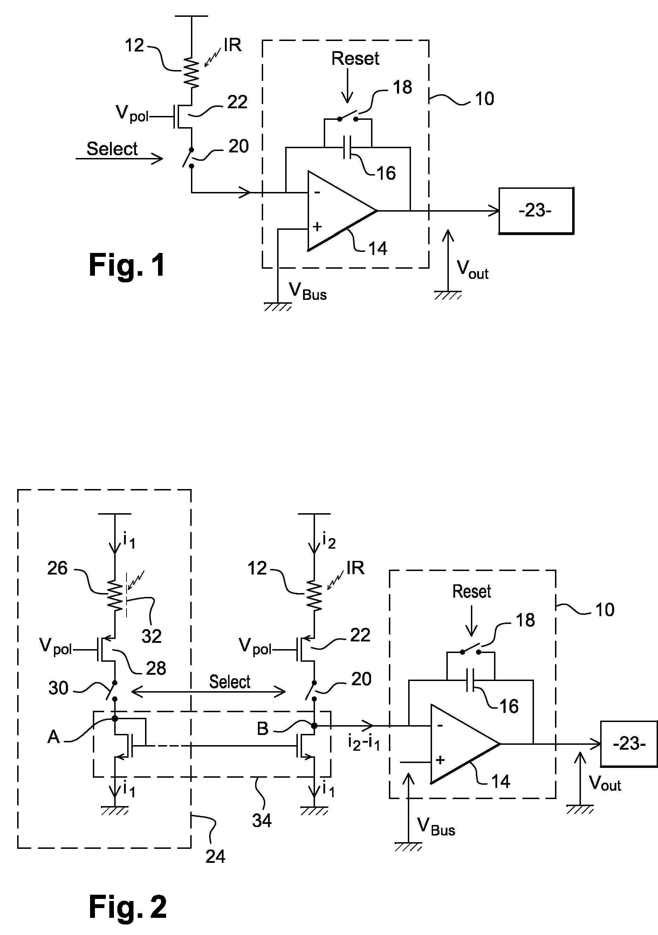

Afin d'expliciter la difficulté d'exploiter une aussi faible variation, on a schématisé en relation avec la figure 1, un circuit de lecture d'un bolomètre résistif **12** de résistance $R_b$, soumis à un rayonnement infrarouge et connecté à l'une de ses bornes à une tension constante prédéterminée. Le circuit de lecture comprend un intégrateur **10** comprenant :

- un amplificateur opérationnel **14** dont l'entrée non inverseuse (+) est mise à une tension constante $V_{bus}$ prédéterminée ;
- un condensateur **16,** de capacité $C_{int}$ prédéterminée, connecté entre l'entrée inverseuse (-) de l'amplificateur **14** et la sortie de celui-ci ;
- un interrupteur de remise à zéro **18** connecté en parallèle du condensateur **16,** et pilotable au moyen d'un signal « Reset ».

Le circuit de lecture comprend en outre :

- un premier interrupteur **20** de lecture, pilotable au moyen d'un signal « Select » et connecté à l'entrée inverseuse (-) de l'amplificateur opérationnel **14 ;**
- un transistor MOS **22** d'injection, dont la grille est mise à une tension $Vp_{ol}$ constante prédéterminée, dont la source est connectée à l'autre borne du bolomètre **12,** et dont le drain est connecté à l'autre borne du premier interrupteur **20** de sélection ; et
- une unité **23** de traitement d'information, connectée en sortie de l'amplificateur opérationnel **14,** et déterminant en fonction de la tension $V_{out}$ en sortie de

celui-ci la variation de la résistance du bolomètre **12** induite par le rayonnement infrarouge reçu par ce dernier, et donc ce rayonnement infrarouge.

Au début d'un cycle de lecture du bolomètre **12,** l'interrupteur de remise à zéro **18,** qui est à l'état fermé suite à un cycle de décharge du condensateur **16,** est basculé à l'état ouvert par réglage du signal « Reset » à une valeur appropriée. Le premier interrupteur **20** de lecture, qui est dans l'état ouvert, est basculé à l'état fermé par réglage du signal « Select ». Le courant traversant le bolomètre **12** est alors intégré par le condensateur **16.** Lorsqu'une durée d'intégration $\Delta T_{int}$ prédéterminée s'est écoulée depuis le début du cycle de lecture, le premier interrupteur de lecture **20** est basculé dans son état ouvert. La tension $V_{out}$ en sortie de cet intégrateur, image de la résistance $R_b$ du bolomètre, est alors donnée par l'expression :

$$V_{out} = \frac{V_{bolo}}{R_b} \times \frac{\Delta T_{int}}{C_{int}} + V_{bus} \qquad (3)$$

où $V_{bolo}$ est la tension de polarisation aux bornes du bolomètre **12** contrôlée par la tension $V_{pol}$, en admettant, pour simplifier, que $R_b$ varie peu pendant la durée d'intégration Tint.

Ainsi, une matrice de N résistances (bolomètres) pourrait être lue selon ce principe à l'aide de l'intégration simultanée (au moyen de N intégrateurs) ou séquentielle (sur un intégrateur disposé en bout de ligne ou en bout de colonne, voire un seul intégrateur pour la matrice) des courants issus de chaque résistance.

Lorsque la matrice ainsi réalisée est éclairée par la projection d'une scène infrarouge, $V_{out}$ va présenter des variations spatiales (issues de chaque bolomètre) représentatives de la scène. Il est rappelé que la tension $V_{out}$ telle qu'exprimée précédemment est constituée pour une très grande part, d'une partie constante d'un détecteur à l'autre, qui ne présente donc aucun intérêt en termes d'imagerie.

Par ailleurs, de par l'existence du couplage thermique entre le substrat et le bolomètre, les variations thermiques subies par le substrat se reportent sur le bolomètre. Comme les bolomètres usuels présentent une sensibilité très importante à de telles variations, ceci a pour conséquence que le signal de sortie est perturbé par ce signal parasite de fond, ce qui nuit à la qualité de la détection du rayonnement infrarouge.

L'ensemble de ces perturbations, contenues dans le signal $V_{out}$, est usuellement appelé signal « de mode commun ».

Enfin, la lecture d'un bolomètre impose de faire circuler dans celui-ci un courant électrique. De fait, le bolomètre s'échauffe par effet joule (on parle usuellement d'« auto-échauffement ») ajoutant encore en cela une composante de courant parasitant le signal utile lié à la scène. Cet auto-échauffement $\Delta\theta(t)$, fonction du

temps, peut être déterminé à partir de l'équation différentielle suivante :

$$C_{th} \times \frac{\partial \Delta\theta(t)}{\partial t} = \frac{V_{bolo}^2}{R_b(\theta(t))} - \frac{\Delta\theta(t)}{R_{th}}$$

où $C_{th}$ est la capacité calorifique de la membrane sensible.

Pour un temps d'intégration $T_{int}$ très court de l'ordre de quelques dizaines de microsecondes après l'application de la tension $Vp_{ol}$ à $t = 0$, réchauffement peut être considéré comme linéaire et donné par la relation :

$$\Delta\theta = \frac{V_{bolo}^2}{C_{th} \times R_b(\theta(t = 0))} T_{int}$$

Il apparait alors que, pour des valeurs typiques de $C_{th}$, $R_{th}$, $V_{bolo}$ et $T_{int}$, cette élévation de température par auto-échauffement atteint typiquement plusieurs degrés Kelvin. Ainsi, des variations spatiales technologiques de $C_{th}$ ou $R_b$ même très limitées, par exemple de l'ordre de 1%, se traduisent par des variations spatiales de température de chaque membrane à la fin du temps d'intégration de l'ordre de 20mK pour un échauffement électrique $\Delta\theta$ de 2°, c'est-à-dire du même ordre que l'échauffement provoqué par une augmentation de température de scène de 1K.

Ainsi, ces dispersions viennent également perturber la représentativité du signal $V_{out}$ par rapport aux variations spatiales et temporelles de puissance radiative, seules représentatives de la scène observée, et qui constituent le signal utile.

Pour pallier ces inconvénients, il a été proposé une structure résistive dite de « référence » décrite dans le document « Performance of 320x240 Uncooled Bolometer-type Infrared Focal Plane Arrays » de Yutaka Tanake et al., Proc. SPIE, vol 5074. D'autres documents employant des structures fournissant des grandeurs électriques de références sont par exemple les demandes de brevet EP1211888, US20030160171, US5756999, US20020074499 et EP2012101.

Le principe d'une structure résistive de référence est d'associer au bolomètre résistif **12** de la figure 1, un second bolomètre résistif identique, polarisé et connecté au substrat de manière identique au premier bolomètre. Ce second bolomètre est en outre agencé de manière à être essentiellement insensible au flux en provenance de la scène, typiquement par une membrane métallique opaque ou disposé dans une zone non éclairée par la scène. Les premier et second bolomètres résistifs sont par ailleurs associés de sorte que le courant traversant le second bolomètre est soustrait du courant traversant le premier bolomètre et que ce soit cette différence de courants qui soit utilisée par le circuit de lecture.

Afin de distinguer les fonctions de ces deux bolomètres, on utilisera l'expression bolomètre « d'imagerie » pour le premier bolomètre, et l'expression bolomètre « de référence » pour le second bolomètre, même si dans certaines applications, de thermométrie par exemple, on ne forme pas forcement une image, mais par exemple une mesure de température.

Une structure de référence **24** est schématiquement illustrée à la figure 2, qui reprend les éléments de la figure 1, auxquels est associé un circuit dit « de référence » **24**. Le circuit de référence **24** comprend un bolomètre de référence **26,** un transistor MOS de polarisation **28** et un second interrupteur de lecture **30,** respectivement sensiblement identiques au bolomètre d'imagerie **12,** au transistor MOS d'injection **22** et au premier interrupteur de lecture **20**.

Les éléments **26, 28** et **30** sont de plus polarisés et agencés de la même manière que les éléments **12, 22** et **20,** à la seule différence que le bolomètre de référence **26** est par exemple pourvu d'une membrane métallique opaque **32** le protégeant du rayonnement issu de la scène ou est disposé dans une zone non éclairée par la scène.

La structure résistive de référence comporte enfin un miroir de courant **34,** dont une branche d'entrée est connectée à une borne A du second interrupteur de lecture **30,** et dont l'autre branche d'entrée est connectée à une borne B du premier interrupteur de lecture **20**. Ce miroir de courant **34** reproduit sensiblement le courant $i_1$ traversant le bolomètre de référence **26** au niveau de la borne B.

La mise en oeuvre de miroirs de courant permet de ne disposer que d'une seule structure de référence par ligne, l'ensemble de ces structures étant disposé selon une « colonne » de référence pour un détecteur matriciel. Les miroirs de courant sont des structures connues de l'homme du métier. Elles permettent de manière générale la copie d'un courant de référence dans une structure éloignée, et en particulier la distribution de ce courant de référence dans une multitude d'éléments de circuiterie, indépendamment de leur charge résistive.

Ainsi, le courant $i_1$ traversant le bolomètre de référence est sensiblement égal au courant de mode commun, et le bolomètre de référence est sujet aux mêmes variations thermiques en provenance du substrat que le bolomètre d'imagerie. La différence $i_2\text{-}i_1$ entre le courant $i_2$ traversant le bolomètre d'imagerie et le courant $i_1$ traversant le bolomètre de référence est alors sensiblement exempte des perturbations constituées par le courant de mode commun et la composante liée aux variations thermiques du substrat, au moins tant que le substrat est essentiellement isotherme. Cette différence de courant $i_2\text{-}i_1$ correspond donc sensiblement au courant induit par la variation de résistance du bolomètre d'imagerie **12** du fait de son échauffement par le rayonnement infrarouge issu de la scène.

Classiquement, il existe deux agencements utilisant des bolomètres de référence.

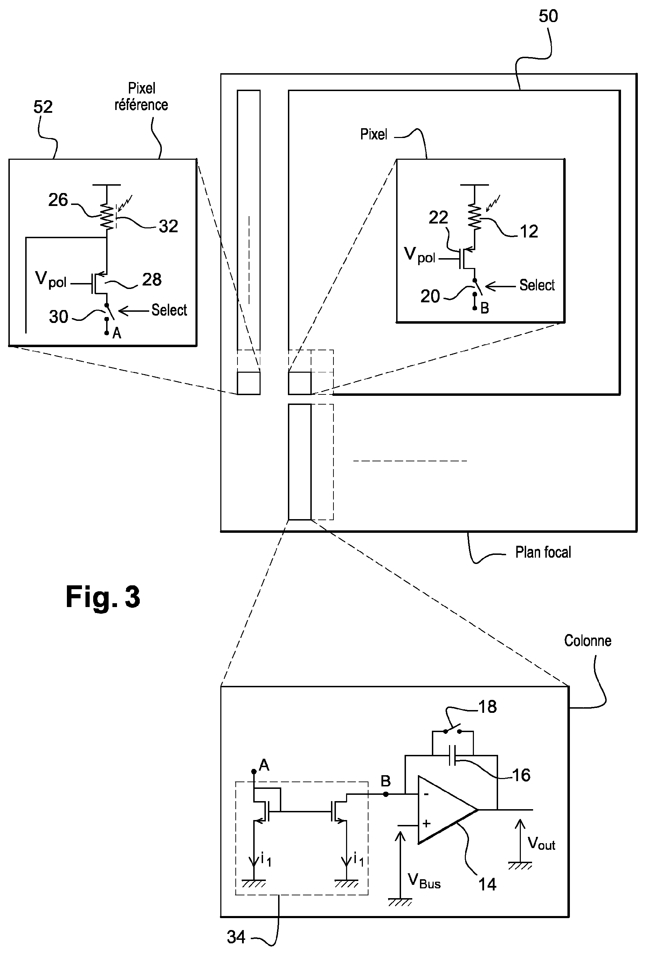

Dans un premier agencement illustré à la figure 3, un bolomètre de référence **26** est prévu pour chaque ligne d'une matrice **50** de bolomètres d'imagerie et fournit donc, via le miroir de courant **34,** un courant dit « de référence » pour l'ensemble des bolomètres d'imagerie de la ligne. Les phénomènes d'auto-échauffement de ces bolomètres d'imagerie **12** sont ainsi compensés puisque le bolomètre de référence **26** subit les mêmes cycles de polarisation que les bolomètres d'imagerie **12** de la ligne associée. En revanche, prévoir un bolomètre de référence **26** pour chaque ligne de la matrice de bolomètres d'imagerie génère un bruit spatial en ligne du fait des dispersions technologiques des bolomètres de référence.

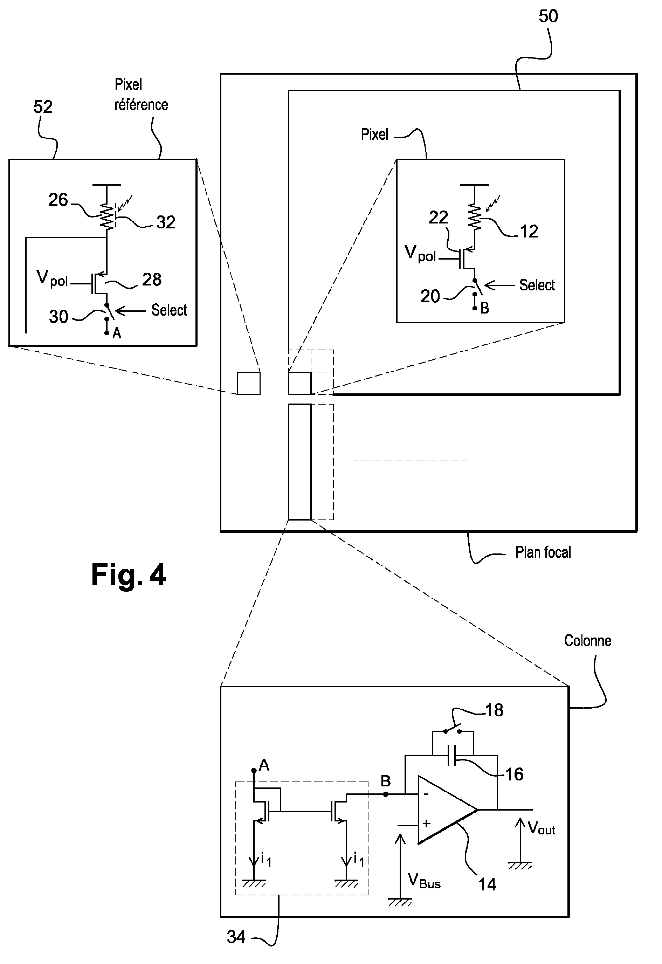

Dans un second agencement illustré à la figure 4, un unique bolomètre de référence **26** est prévu pour l'ensemble des bolomètres d'imagerie de la matrice **50.** Le courant issu de celui-ci est recopié alors par un jeu de miroirs de courant **34.** Le bruit spatial généré par les dispersions technologiques est ainsi évité. Toutefois, le cycle thermique de cet unique bolomètre de référence **26** est sensiblement différent de celui des bolomètres d'imagerie **12.** En effet, contrairement à un bolomètre d'imagerie qui est polarisé lors de la lecture de sa ligne, le bolomètre de référence **26** est polarisé à chaque lecture de ligne. La constante de temps thermique du bolomètre de référence $R_{th}$ x $C_h$ de l'ordre de quelques millisecondes, ne lui permet pas de revenir à sa température d'équilibre avant chaque cycle de lecture (d'intégration). En conséquence, l'auto-échauffement du bolomètre de référence **26** diffère sensiblement de l'auto-échauffement des bolomètres d'imagerie **12,** de sorte que la réjection de cette composante est de piètre qualité.

Il est à noter que les phénomènes d'auto-échauffement sont d'autant plus prononcés que l'isolation des membranes des bolomètres d'imagerie **12** est élevée, ce qui est le cas dans les détecteurs haut de gamme, pour lesquels on cherche à maximiser $R_{th}$ pour maximiser la sensibilité, ce qui conduit aussi à diminuer $C_{th}$ pour maintenir une constante de temps thermique compatible avec les standards de fréquence trame d'imagerie. De ce fait, l'échauffement après chaque lecture est supérieur pour des stimuli semblables, et finalement l'élévation résiduelle de température au départ du cycle suivant est d'autant plus sensible.

La réjection du courant de mode commun est donc d'autant plus délicate que le détecteur est sensible, ce qui limite finalement les améliorations de performances qu'il est possible d'apporter à ces détecteurs.

Par ailleurs, une structure résistive de référence est techniquement difficile à produire. En effet, pour obtenir un fonctionnement satisfaisant de celle-ci, il est nécessaire que la membrane métallique **26** protégeant le bolomètre de référence soit totalement imperméable au flux issu de la scène, tout en étant thermiquement isolée des autres éléments de la structure pour éviter toute perturbation thermique sur le bolomètre de référence. Une telle membrane est difficile à concevoir et à produire. En outre, la complexification sensible qu'implique l'élaboration d'une telle membrane entraîne nécessairement un surcoût, du fait d'étapes supplémentaires de fabrication et donc un rendement de production non idéal. Il en va de même lorsque le bolomètre de référence est disposé dans une zone non éclairée par la scène car cela oblige à prévoir un espace suffisant en surface du substrat du circuit de lecture, en plus généralement d'un écran opaque rapporté à l'intérieur du boitier. Le résultat est globalement un coût plus élevé du détecteur.

De fait pour les détecteurs ne nécessitant pas une grande précision, le bolomètre de référence est classiquement remplacé par un bolomètre dit de « compensation », c'est-à-dire un bolomètre qui ne possède pas de membrane d'occultation optique. Un tel bolomètre de compensation est généralement thermalisé au substrat, c'est-à-dire qu'il ne possède pas de bras de fixation ou qu'il est formé partiellement ou en totalité au contact direct du substrat afin de créer un court-circuit thermique entre le bolomètre de compensation et le substrat. Le bolomètre de compensation subit donc essentiellement le même échauffement que le substrat. La réjection du mode commun consiste alors essentiellement en la seule réjection de la partie du signal correspondant à la température du substrat reportée sur les bolomètres d'imagerie. Il en résulte une réjection de mode commun de qualité limitée.

**EXPOSE DE L'INVENTION**

Le but de la présente invention est de résoudre le problème susmentionné en proposant, dans un détecteur bolométrique, une structure de réjection du mode commun qui évalue et compense avec précision les phénomènes d'augmentation de courant par auto-échauffement subis par les bolomètres d'imagerie, sans pour autant impliquer une complexification sensible des processus de fabrication du détecteur.

A cet effet, l'invention a pour objet un dispositif pour la détection d'un rayonnement électromagnétique comprenant :

- un substrat ;
- un bolomètre d'imagerie, comportant une membrane bolométrique suspendue au-dessus du substrat ;
- un circuit de polarisation du bolomètre d'imagerie et apte à polariser celui-ci sous une tension de polarisation prédéterminée ;
- un circuit de réjection apte à générer un courant de mode commun, le circuit de réjection comportant un bolomètre de compensation thermalisé au substrat et un circuit de polarisation du bolomètre de compensation ; et
- un circuit de mesure apte à être connecté au bolomètre d'imagerie et au circuit de rejection pour mesurer la différence entre le courant circulant dans le bolomètre d'imagerie lors de sa polarisation et le courant de mode commun généré par le circuit de réjection.

Selon l'invention, le circuit de réjection comporte en outre un générateur de courant apte à produire un courant simulant le courant induit par l'auto-échauffement du bolomètre d'imagerie sous l'effet de sa polarisation, la somme du courant traversant le bolomètre de compensation et du courant généré par le générateur de courant formant le courant de mode commun.

En d'autres termes, on associe à un bolomètre de compensation classique, thermalisé au substrat, un générateur de courant qui estime l'augmentation de courant induit par l'auto-échauffement du bolomètre d'imagerie. La somme des courants issus du bolomètre de compensation et du générateur est alors équivalente au courant que produirait un bolomètre de référence subissant les mêmes cycles d'auto-échauffement que le bolomètre d'imagerie. De plus, pour atteindre un tel résultat, aucune membrane d'occultation optique n'est nécessaire, ni rejet du bolomètre de compensation dans une zone non éclairée par la scène, la précision de la rejection du mode commun étant associée à la conception du générateur de courant dont la conception et la fabrication sont plus simples que la conception et la fabrication d'une membrane d'occultation optique usuellement présente dans un bolomètre de référence, ou non contraignant en terme d'espace à préserver sur le circuit de lecture et de pièces d'occultation à prévoir.

Selon l'invention, le générateur de courant est apte à produire un courant $\Delta i$ se fondant sur un modèle du courant induit par l'auto-échauffement selon la relation :

$$\Delta i(t) = \frac{|TCR| \times V_{bolo}^3}{C_{th} \times R_b^2} \times t$$

où $t$ est le temps écoulé depuis le début de l'application de la polarisation, $TCR$ est le coefficient de variation de résistance en température du bolomètre d'imagerie, $C_{th}$ est la capacité thermique du bolomètre d'imagerie, $R_b$ est la résistance du bolomètre d'imagerie sans auto-échauffement, et $V_{bolo}$ est la tension aux bornes du bolomètre d'imagerie.

En d'autres termes, comme il apparaitra plus loin, le générateur de courant se fonde sur une approximation au premier ordre des équations différentielles modélisant le comportement d'un bolomètre d'imagerie soumis à différents contributeurs d'énergie lors de sa polarisation. Cette approximation au premier ordre, qui admet la proportionnalité de l'échauffement avec la durée de polarisation, est pertinente dans la mesure où les périodes d'intégration sont très courtes, usuellement de l'ordre de quelques dizaines de microsecondes, et que les variations de température subies pendant ces périodes par le bolomètre d'imagerie sont faibles. On obtient ainsi un générateur de courant se fondant sur une relation dont la mise en oeuvre est simplifiée.

Plus particulièrement, le générateur de courant comporte :

- un module de génération de courant comprenant :

  ○ une première résistance ;
  ○ un circuit de polarisation de la première résistance apte polariser celle-ci selon une tension de pilotage reçue sur une borne d'entrée ;
  ○ un condensateur relié à la première résistance de manière à être chargé par le courant traversant cette résistance ;
  ○ un interrupteur de remise à zéro de la charge du condensateur ;
  ○ une seconde résistance ; et
  ○ un circuit de polarisation de la seconde résistance, apte à polariser celle-ci selon la tension aux bornes du condensateur reçue sur une borne d'entrée, le courant traversant la seconde résistance formant le courant de sortie du générateur de courant,

- et un générateur de tension, dit par la suite « module de tension », générant une tension de pilotage du circuit de polarisation de la première résistance en fonction du coefficient $TCR$ et de la tension de polarisation $V_{pol}$ du bolomètre d'imagerie.

En d'autres termes, le générateur de courant se compose d'un circuit analogique simulant l'auto-échauffement du bolomètre d'imagerie piloté par un module générateur de tension tenant compte des paramètres de fonctionnement du bolomètre d'imagerie que sont son coefficient de variation de résistance en température et sa tension de polarisation.

Avantageusement, la première et la seconde résistances sont des bolomètres thermalisés au substrat et présentant un coefficient de variation en résistance en température similaire à celui du bolomètre d'imagerie. Ainsi, la valeur des résistances évolue de manière similaire à celle du bolomètre d'imagerie (hors auto-échauffement) en fonction de la température.

Avantageusement, le bolomètre d'imagerie est du type à semi-conducteur, et le module de tension est apte à générer une tension de pilotage selon la relation :

$$V_1 = \frac{V_{bolo}^3 \times E_a}{K \times \theta^2}$$

où $V_1$ est la tension de pilotage, $E_a$ est une énergie d'activation prédéterminée du bolomètre d'imagerie, $K$ est la constante de Boltzmann, et $\theta$ est une température mesurée ou estimée du bolomètre d'imagerie.

Il convient de noter que l'identité des termes de la relation exprimant la grandeur $V_1$ s'entend dans le domaine numérique uniquement, l'identité dimensionnelle n'existant pas entre les deux termes de cette relation. Cette remarque s'applique également aux relations exprimant la grandeur $V_1$ exposées ci-après.

En d'autres termes, comme il apparaitra plus loin, le coefficient de variation de résistance en température est évalué en fonction d'un modèle de comportement en température du bolomètre d'imagerie du type Arrhenius, selon lequel la résistance $R_b$ s'exprime sous la forme

$$R_b(\theta(t)) = R_0 \times e^{\frac{E_a}{K \times \theta(t)}}$$

Selon un mode de réalisation de l'invention, le bolomètre d'imagerie est du type à semi-conducteur, la première et la seconde résistances ont sensiblement pour valeur la résistance limite à température infinie du bolomètre d'imagerie, et le module de tension est apte à générer une tension de pilotage selon la relation :

$$V_1 = \frac{V_{bolo}^3 \times E_a}{K \times \theta^2} \times e^{\frac{-2 \times E_a}{K \times \theta}}$$

où $V_1$ est la tension de pilotage, $E_a$ est une énergie d'activation prédéterminée du bolomètre d'imagerie, $K$ est la constante de Boltzmann, et $\theta$ est une température mesurée ou estimée du bolomètre d'imagerie.

En d'autres termes, le coefficient de variation de résistance en température est évalué en fonction d'un modèle de comportement en température du bolomètre d'imagerie du type Arrhenius et le module de tension reproduit ledit modèle.

Selon un mode de réalisation de l'invention, la température θ est une mesure de la température du substrat. En d'autres termes, la température du bolomètre d'imagerie est estimée, pour l'évaluation du courant induit par auto-échauffement, sensiblement égale à celle du substrat, ce qui est le cas au premier ordre.

L'invention a également pour objet un détecteur bolométrique comportant un substrat, une matrice de bolomètres d'imagerie du rayonnement électromagnétique, chacun des bolomètres d'imagerie comportant une membrane suspendue au dessus du substrat et chacun des bolomètres d'imagerie étant associé à :

- un circuit de polarisation apte à polariser ledit bolomètre sous une tension de polarisation prédéterminée ;
- un circuit de réjection apte à générer un courant de mode commun, le circuit de réjection comportant un bolomètre de compensation thermalisé au substrat et un circuit de polarisation du bolomètre de compensation ;
- et un circuit de mesure apte à mesurer la différence entre le courant circulant dans le bolomètre lors de sa polarisation et le courant de mode commun généré par le circuit de réjection,

Selon l'invention, le circuit de réjection est du type précité.

En d'autres termes, l'association d'un bolomètre d'imagerie, d'un bolomètre de compensation et d'un générateur de courant du type précité, trouve particulièrement application dans les détecteurs bolométriques matriciels.

Selon un mode de réalisation du détecteur, chaque colonne de bolomètres d'imagerie de la matrice est associée à un unique circuit de réjection.

Selon un autre mode de réalisation du détecteur, celui-ci comprend un unique circuit de réjection, ainsi qu'un miroir de courant associé à chaque colonne de bolomètres d'imagerie de la matrice pour la recopie du courant délivré par le circuit de réjection.

## BREVE DESCRIPTION DES FIGURES

L'invention sera mieux comprise à la lecture de la description qui va suivre, donnée uniquement à titre d'exemple, et faite en relation avec les dessins annexés, dans lesquels des références identiques se réfèrent à des éléments identiques ou analogues, et dans lesquels :

- la figure 1 est une vue schématique d'un bolomètre sensible et de son dispositif de lecture selon l'état antérieur de la technique, discuté dans le préambule ;
- la figure 2 est une vue schématique complétant la figure 1 avec compensation de mode commun à l'aide d'une structure résistive de référence selon l'état antérieur de la technique et des éléments de circuiterie associés, discuté dans le préambule ;
- les figures 3 et 4 sont des vues schématiques d'agencements possibles de structures résistives de référence dans un détecteur bolométrique ; et
- la figure 5 est une vue schématique d'un mode de réalisation préféré d'un détecteur bolométrique selon l'invention.

## DESCRIPTION DETAILLEE DE L'INVENTION

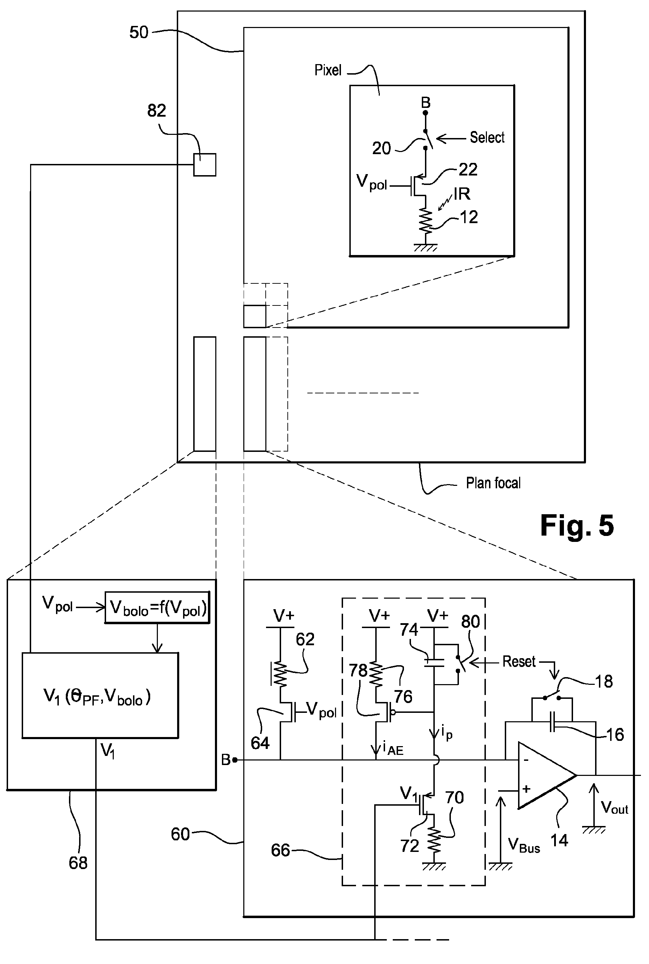

Un détecteur bolométrique selon l'invention est illustré à la figure 5. Comme cela a été décrit précédemment en relation avec les figures 2 à 4, le détecteur comporte une matrice de pixels bolométriques **50,** chacun des pixels comportant un bolomètre d'imagerie **12** ayant une membrane bolométrique sensible au rayonnement infrarouge et suspendue au dessus d'un substrat au moyen de bras de soutien et d'isolation thermique. La membrane bolométrique est du type à semi-conducteur, et comporte par exemple du silicium amorphe ou des oxydes de vanadium.

Chaque pixel de la matrice **50** comporte également un transistor MOS **22** et un interrupteur de lecture **20.** Chaque colonne de la matrice **50** est associée à une circuiterie de lecture **60** réalisée dans le substrat. La circuiterie **60** comporte un intégrateur, formé d'un amplificateur opérationnel **14**, d'un condensateur **16** et d'un interrupteur de remise à zéro **18**.

La circuiterie **60** comporte également un bolomètre de compensation **62** thermalisé au substrat. Par exemple le bolomètre de compensation **62** ne possède pas de bras de soutien et/ou est formé partiellement ou en totalité au contact direct du substrat de manière à créer un court-circuit thermique entre le bolomètre de compensation et le substrat. Un transistor MOS de polarisation **64** est par ailleurs prévu pour polariser le bolomètre de compensation **62**, le transistor **64** étant par ailleurs connecté à un noeud B auquel est connecté l'interrupteur de lecture **20** de chaque pixel de la colonne de la matrice **50**.

La circuiterie de lecture **60** comporte en outre un module analogique **66** produisant un courant $i_{AE}$ dépendant linéairement du temps et piloté au moyen d'une *tension $V_1$* fournie par un module **68** de tension, agencé dans le substrat ou externe.

Le module analogique **66** comporte une première résistance **70**, un premier transistor MOS **72** de polarisation de la résistance **70** piloté par la tension $V_1$, un condensateur **74** connecté en série avec le premier transistor MOS **72** et la première résistance **70**, une seconde résistance **76**, un second transistor MOS **78** de polarisation de la seconde résistance **76**, piloté par la tension aux bornes du condensateur **74**. Un interrupteur **80**, piloté par le signal « Reset » est par ailleurs prévu pour décharger le condensateur **74** avant chaque cycle de lecture d'un bolomètre d'imagerie.

Ainsi, après initialisation du condensateur **74** par la fermeture momentanée de l'interrupteur **80**, et en appliquant la tension $V_1$ au premier MOS de polarisation **72**, la tension $V_1$ est appliquée aux bornes de la première résistance **70** (à la tension de seuil près du transistor MOS **72** que l'on néglige ici pour simplifier les expressions). Le courant $i_p$ traversant la première résistance **70** charge alors le condensateur **74** à courant constant. La tension $V_2$ aux bornes du condensateur **74** prend alors la forme :

$$V_2(t) = -\frac{V_1}{C \times R_1} \times t \qquad (1)$$

où C est la valeur de la capacité du condensateur **74**, $R_1$ est la valeur de la première résistance **70**, et en considérant l'origine du temps *t* à l'instant initial de l'application de la tension $V_1$ au transistor MOS **72**.

Le courant $i_{AE}$ s'écoulant dans la seconde résistance **76** et venant s'ajouter au courant circulant dans le bolomètre de compensation **62** est alors égal à :

$$i_{AE}(t) = -\frac{V_1}{C \times R_1 \times R_2} \times t \qquad (2)$$

où $R_2$ est la valeur de la seconde résistance **76**.

Le module de tension **68** est quant à lui connecté à un capteur de température **82**, agencé dans le substrat et mesurant la température de celui-ci, ainsi qu'à la tension de polarisation $V_{pol}$ appliquée aux grilles des transistors de polarisation **22** des bolomètres d'imagerie **12**, à partir de laquelle le module **68** estime la tension $V_{bolo}$ présente aux bornes du bolomètre d'imagerie **12** selon la configuration donnée du circuit.

PREMIERE VARIANTE

Dans une première variante de l'invention, le module de tension **68** produit la tension $V_1$ selon la relation :

$$V_1 = \frac{V_{bolo}^3 \times E_a}{K \times \theta^2} \qquad (3)$$

où :

- $E_a$ est une énergie d'activation prédéterminée du bolomètre d'imagerie ;
- $K$ est la constante de Boltzmann ; et
- $\theta$ est la température mesurée par le capteur **82**.

Dans cette première variante également, la capacité C du condensateur **74** et les valeurs $R_1$ et $R_2$ des première et seconde résistances **70, 76** sont choisies de manière à ce que le produit $R_1 \times R_2 \times C$ soit sensiblement égal au produit $C_{th} \times R_b^2$. $R_b$ s'entend ici en l'absence d'auto-échauffement.

Les première et seconde résistances **70, 76** sont dans cette première variante des bolomètres thermalisés au substrat du type à semi-conducteur et présentant donc le même coefficient de variation de résistance en température que les bolomètres d'imagerie **12**.

Le courant $i_{AE}$ délivré par le module **66** est alors égal à :

$$i_{AE}(t) = \frac{E_A \times V_{bolo}^3}{K \times \theta^2 \times C_{th} \times R_b^2} \times t \qquad (4)$$

On notera que le courant $i_{AE}$ ainsi produit est une approximation au premier degré d'un modèle physique du courant induit par l'auto-échauffement des bolomètres d'imagerie **12** isolés thermiquement du substrat.

On montre en effet que la température d'un bolomètre d'imagerie **12** polarisé sous la tension $V_{bolo}$ est modélisable selon la relation :

$$C_{th} \times \frac{\partial \Delta\theta(t)}{\partial t} = \frac{V_{bolo}^2}{R_b(\theta(t))} - \frac{\Delta\theta(t)}{R_{th}} \qquad (5)$$

où $\partial$ est le symbole de la dérivée partielle et $\Delta\theta(t)$ est l'écart entre la température du bolomètre d'imagerie et la température du substrat.

Or, le temps d'intégration pendant lequel le bolomètre d'imagerie **12** est polarisé pour sa lecture est très court, de l'ordre de quelques dizaines de microsecondes. La variation de résistance du bolomètre pendant ce laps de temps est très faible de sorte que la relation (5) est égale au première ordre à :

$$C_{th} \times \frac{\partial \Delta\theta(t)}{\partial t} = \frac{V_{bolo}^2}{R_b(\theta(t))} \qquad (6)$$

Par ailleurs, la résistance d'un bolomètre d'imagerie de type à semi-conducteur est modélisable selon la relation suivante, dite loi « d'Arrhenius » :

$$R_b(\theta(t)) = R_0 \times e^{\frac{E_a}{K \times \theta(t)}} \qquad (7)$$

où $R_0$ est la résistance limite à température infinie du bolomètre d'imagerie. Le coefficient *TCR* de variation relative de la résistance en température s'exprime selon la relation :

$$TCR = -\frac{E_a}{K \times \theta^2(t)} \qquad (8)$$

En combinant les relations (6) et (7), en appliquant la loi d'ohm, et en utilisant l'approximation au premier ordre selon laquelle l'échauffement est proportionnel au temps, il est ainsi obtenu l'expression du courant induit par l'auto-échauffement du bolomètre d'imagerie suivante :

$$\Delta i(t) = \frac{|TCR| \times V_{bolo}^3}{C_{th} \times R_b^2} \times t \qquad (9)$$

Le courant $i_{AE}$ produit par le module **66** se fonde donc avantageusement sur l'approximation au premier ordre de la relation (9) en faisant pour hypothèse que la relation entre la température et la résistance d'un bolomètre d'imagerie est du type selon la relation (7) et que la température de ce bolomètre est égale, au premier ordre, à celle du substrat.

DEUXIEME VARIANTE

Dans une deuxième variante, les valeurs $R1$ et

$R2$ des résistances **70** et **76** sont choisies sensiblement égales à la résistance limite à température infinie $R_0$ des bolomètres d'imagerie **12** et la valeur $C$ du condensateur **74** est choisie de façon à ce que le produit $R_1 \times R_2 \times C$ soit sensiblement égal au produit $C_{th} \times R_0^2$ des bolomètres d'imagerie **12**.

Dans cette variante, la tension de pilotage $V_1$ produite par le module de tension est égale à :

$$V_1 = \frac{V_{bolo}^3 \times E_a}{K \times \theta^2} \times e^{\frac{-2 \times E_a}{K \times \theta}} \qquad (10)$$

Le courant $i_{AE}$ produit par le module **66** est alors égal à :

$$i_{AE}(t) = \frac{E_A \times V_{bolo}^3}{K \times \theta^2 \times C_{th} \times \left( R_0 \times e^{\frac{E_a}{K \times \theta}} \right)^2} \times t \qquad (11)$$

Le courant ainsi produit selon la relation (11) constitue également une approximation au premier ordre se fondant sur la relation (9) en faisant pour hypothèse que la relation entre la température et la résistance d'un bolomètre d'imagerie est du type selon la relation (7) et que la température de ce bolomètre est égale, au premier ordre, à celle du substrat. A la différence du courant produit selon la relation (4), l'évolution de la résistance en fonction de la température est ici simulée par l'association des résistances **70** et **76** de valeurs constantes et égale à la valeur limite $R_0$, et de la valeur de la tension $V_1$ qui comporte le terme exponentiel.

La première variante est préférée lorsqu'une précision élevée est souhaitée, l'évolution en température de la résistance induite par l'auto-échauffement étant produite par des résistances similaires aux bolomètres d'imagerie.

La seconde variante est quant à elle préférée lorsqu'une conception simple de la circuiterie de lecture est privilégiée, dans la mesure où des résistances classiques sont utilisées.

Ainsi, la réjection du mode commun est réalisée à la fois par le bolomètre de compensation **62,** qui a pour effet de rejeter la portion du mode commun correspondant à la température du substrat, et par l'association du module de tension **68** et du module de courant **66,** qui ensemble produisent un courant ayant pour effet de rejeter la portion du mode commun correspondant à l'auto-échauffement des bolomètres d'imagerie **12** lors de leur lecture. Un bolomètre de référence idéal est ainsi simulé.

Il a été décrit un mode de réalisation dans lequel le circuit de réjection du mode commun comporte un générateur de courant, formé de l'association des modules **66** et **68,** présent en bout de chaque colonne de la matrice **50.**

En variante, un seul générateur de courant de ce type est prévu et le courant produit par celui-ci est recopié pour chaque colonne au moyen de miroirs de courant.

Il a été également décrit un mode de réalisation dans lequel le courant est produit en se fondant sur la relation (6) décrivant l'évolution de la résistance d'un bolomètre du type à semi-conducteur en fonction de sa température.

## Revendications

1. Dispositif pour la détection d'un rayonnement électromagnétique comprenant :

   - un substrat ;
   - un bolomètre résistif d'imagerie (12), comportant une membrane bolométrique suspendue au-dessus du substrat ;
   - un circuit de polarisation (22) du bolomètre d'imagerie et apte à polariser celui-ci sous une tension de polarisation prédéterminée ;
   - un circuit de réjection (62, 64, 66, 68) apte à générer un courant de mode commun, le circuit de réjection comportant un bolomètre de compensation (62) thermalisé au substrat et un circuit de polarisation (64) du bolomètre de compensation ; et
   - un circuit de mesure (14, 16, 18) apte à être connecté au bolomètre d'imagerie (12) et au circuit de rejection (62, 64, 66, 68) pour mesurer la différence entre le courant circulant dans le bolomètre d'imagerie (12) lors de sa polarisation et le courant de mode commun généré par le circuit de réjection (62, 64, 66, 68),

   *caractérisé* **en ce que** le circuit de réjection (62, 64, 66, 68) comporte en outre un générateur de courant (66, 68) apte à produire un courant simulant le courant induit par l'auto-échauffement du bolomètre d'imagerie (12) sous l'effet de sa polarisation, la somme du courant traversant le bolomètre de compensation (62) et du courant généré par le générateur de courant (66, 68) formant le courant de mode commun,

   et **en ce que** le générateur de courant (66, 68) est apte à produire un courant se fondant sur un modèle du courant induit par l'auto-échauffement selon la relation :

$$\Delta i(t) = \frac{\left| TCR \right| \times V_{bolo}^{3}}{C_{th} \times R_{b}^{2}} \, t$$

où $\Delta i$ est la variation du courant induit par l'auto-échauffement pendant une durée $t$, $TCR$ est le coefficient de variation de résistance en température du bolomètre d'imagerie, $C_{th}$ est la capacité thermique du bolomètre d'imagerie, $R_{b}$ est la résistance du bolomètre d'imagerie, et $V_{bolo}$ est la tension aux bornes du bolomètre d'imagerie.

2. Dispositif pour la détection d'un rayonnement électromagnétique selon la revendication *1*, *caractérisé* **en ce que** le générateur de courant (66, 68) comporte :

   - un module de génération de courant (66) comprenant :

     ○ une première résistance (70) ;
     ○ un circuit de polarisation (72) de la première résistance apte à polariser celle-ci

     selon une tension de pilotage ($V_1$) reçue sur une borne d'entrée ;

     ○ un condensateur (74) relié à la première résistance (70) de manière à être chargé par le courant traversant cette résistance ;
     ○ un interrupteur de remise à zéro (80) de la charge du condensateur ;
     ○ une seconde résistance (76) ; et
     ○ un circuit de polarisation (78) de la seconde résistance (76), apte à polariser celle-ci selon la tension aux bornes du condensateur (74), le courant traversant la seconde résistance (76) formant le courant de sortie du générateur de courant (66, 68),

   - et un module de tension (68) générant une tension de pilotage ($V_1$) du circuit de polarisation (72) de la première résistance (70) en fonction du coefficient $TCR$ et de la tension de polarisation $Vp_{ol}$ du bolomètre d'imagerie (12).

3. Dispositif pour la détection d'un rayonnement électromagnétique selon la revendication *1*, *caractérisé* **en ce que** la première et la seconde résistances (70, 76) sont des bolomètres thermalisés au substrat et présentent un coefficient de variation en résistance en température similaire à celui du bolomètre d'imagerie (12).

4. Dispositif pour la détection d'un rayonnement électromagnétique selon la revendication 2 ou 3, *caractérisé* **en ce que** le bolomètre d'imagerie (12) est du type à semi-conducteur, et **en ce que** le module de pilotage (68) est apte à générer une tension de pilotage selon la relation :

$$V_1 = \frac{V_{bolo}^{3} \times E_a}{K \times \theta^{2}}$$

où $V_1$ est la tension de pilotage, $E_a$ est une énergie d'activation prédéterminée du bolomètre d'imagerie, K est la constante de Boltzmann, et $\theta$ est une température mesurée ou estimée du bolomètre d'imagerie.

5. Dispositif pour la détection d'un rayonnement électromagnétique selon l'une des revendications 3 et 4, *caractérisé* **en ce que** le produits des résistances des première et seconde résistances (70, 76) et de la capacité du condensateur (74) est sensiblement égal au produit $C_{th} \times R^2_b$, où $C_{th}$ et $R_b$ sont respectivement la capacité thermique et la résistance électrique du bolomètre d'imagerie.

6. Dispositif pour la détection d'un rayonnement électromagnétique selon la revendication 2, *caractérisé* **en ce que** le bolomètre d'imagerie (12) est du type à semi-conducteur, **en ce que** la première et la seconde résistances (70, 76) ont sensiblement pour valeur la résistance limite à température infinie $R_0$ du bolomètre d'imagerie (12), et **en ce que** le module de pilotage (68) est apte à générer une tension de pilotage selon la relation :

$$V_1 = \frac{V_{bolo}^3 \times E_a}{K \times \theta^2} \times e^{\frac{-2 \times E_a}{K \times \theta}}$$

où $V_1$ est la tension de pilotage, $E_a$ est une énergie d'activation prédéterminée du bolomètre d'imagerie, K est la constante de Boltzmann, et $\theta$ est une température mesurée ou estimée du bolomètre d'imagerie.

7. Dispositif pour la détection d'un rayonnement électromagnétique selon la revendication 6, *caractérisé* **en ce que** le produit des résistances des première et seconde résistances (70, 76) et de la capacité du condensateur (74) est sensiblement égal au produit $C_{th} \times R_0^2$ où $C_{th}$ et $R_0$ sont respectivement la capacité thermique et la résistance électrique à température infinie du bolomètre d'imagerie.

8. Dispositif pour la détection d'un rayonnement électromagnétique selon l'une des revendications 4 à 7, *caractérisé* **en ce que** la température $\theta$ est une mesure de la température du substrat.

9. Détecteur bolométrique comportant un substrat, une matrice (50) de bolomètres d'imagerie (12) du rayonnement électromagnétique, chacun des bolomètres (12) d'imagerie comportant une membrane suspendue au dessus du substrat et chacun des bolomètres d'imagerie (12) étant associé à :

    ■ un circuit de polarisation (22) apte à polariser ledit bolomètre sous une tension de polarisation prédéterminée ;
    ■ un circuit de réjection (62, 64, 66, 68) apte à générer un courant de mode commun, le circuit de réjection (62, 64, 66, 68) comportant un bolomètre de compensation (62) thermalisé au substrat et un circuit de polarisation (64) du bolomètre de compensation (62) ;
    ■ et un circuit de mesure (14, 16, 18) apte à mesurer la différence entre le courant circulant dans le bolomètre d'imagerie (12) lors de sa polarisation et le courant de mode commun généré par le circuit de réjection (62, 64, 66, 68),

*caractérisé* **en ce que** le circuit de réjection est conforme à l'une quelconque des revendications précédentes.

10. Détecteur selon la revendication 9, *caractérisé* **en ce que** chaque colonne de bolomètres d'imagerie de la matrice (50) est associée à un unique circuit de réjection (62, 64, 66, 68).

11. Détecteur selon la revendication 10, *caractérisé* **en ce qu'**il comprend un unique circuit de réjection (62, 64, 66, 68), ainsi qu'un miroir de courant associé à chaque colonne de bolomètres d'imagerie de la matrice (50) pour la recopie du courant délivré par le circuit de réjection (62, 64, 66, 68).

**Patentansprüche**

1. Vorrichtung zur Erfassung von elektromagnetischer Strahlung, umfassend:

    • ein Substrat;
    • einen bildgebenden Widerstandsbolometer (12), mit einer bolometrischen Membran, die über dem Substrat gespannt ist;
    • ein Vorspannungs-Schaltkreis (22) des Bildgebungsbolometers, der in der Lage ist, diesen unter einer vorher festgelegten Vorspannung zu polarisieren;
    • ein Unterdrückungs-Schaltkreis (62, 64, 66, 68), der in der Lage ist, einen Gleichtaktstrom zu erzeugen, dabei umfasst der Unterdrückungs-Schaltkreis einen Ausgleichs- Bolometer (62), thermalisiert mit dem Substrat und einen Vorspannungs-Schaltkreis (64) des Ausgleichs-Bolometers; und
    • einen Messschaltkreis (14, 16, 18), der mit dem Bildgebungs- Bolometer (12) und mit dem Unterdrückungs-Schaltkreis (62, 64, 66, 68) verbunden werden kann, um die Differenz zwischen dem im Bildgebungs- Bolometer (12) bei seiner Polarisierung fließenden Strom und dem Gleichtaktstrom, erzeugt vom Unterdrückungs-Schaltkreis (62, 64, 66, 68) zu messen,

**dadurch gekennzeichnet, dass** der Unterdrückungs-Schaltkreis (62, 64, 66, 68) außerdem einen Stromerzeuger (66, 68) umfasst, der in der Lage ist, einen Strom zu erzeugen, der den durch die Selbsterwärmung des Bildgebungs- Bolometers (12) unter Einwirkung der Polarisiemng induzierten Strom simuliert, die Summe aus dem Strom, der den Ausgleichs-Bolometer (62) durchfließt und dem vom Stromerzeuger (66, 68) erzeugten Strom bildet den Gleichtaktstrom.

und dadurch, dass der Stromerzeuger (66, 68) in der Lage ist, einen Strom zu erzeugen, der auf einem Modell des durch Selbsterwärmung induzierten Stromes beruht, nach der Gleichung:

$$\Delta i(t) = \frac{|TCR| \times V_{bolo}^3}{C_{th} \times R_b^2} t$$

worin $\Delta i$ die Variation des durch die Selbsterwärmung während eines Zeitraumes $t$ erzeugten Stromes ist, TCR der Variationskoeffizient der Temperaturbeständigkeit des Bildgebungs-Bolometers, $C_{th}$ ist die Wärmeleistung des BildgebungsBolometers, Rb ist der Widerstand des Bildgebungs-Bolometers und $V_{bolo}$ ist die Spannung an den Klemmen des Bildgebungs-Bolometers.

2. Vorrichtung zur Erfassung von elektromagnetischer Strahlung gemäß Anspruch 1, **dadurch gekennzeichnet, dass** der Stromerzeuger (66, 68) umfasst:

   • ein Stromerzeugungsmodul (66), umfassend:

     ◦ einen ersten Widerstand (70);
     o einen Vorspannungs-Schaltkreis (72) des ersten Widerstandes, durch den dieser polarisiert werden kann, entsprechend einer Steuerspannung ($V_1$), empfangen an einer Eingangsklemme;
     o einen Kondensator (74), verbunden mit dem ersten Widerstand (70), so dass er durch den Strom, der diesen Widerstand durchfließt, geladen werden kann;
     ◦ einen Rückstellschalter (80) für die Nullstellung der Kondensatorladung;
     ◦ einen zweiten Widerstand (76); und
     ◦ einen Vorspannungs-Schaltkreis (78) des zweiten Widerstandes (76), durch den dieser entsprechend der Spannung an den Kondensatorklemmen (74) polarisiert werden kann, der Strom der durch den zweiten Widerstand (76) fließt, bildet den Ausgangsstrom des Stromerzeugers (66, 68).

• und ein Spannungsmodul (68), das eine Steuerspannung ($V_1$) des Vorspannungsschaltkreises (72) des ersten Widerstandes (70) erzeugt, in Abhängigkeit vom Koeffizienten TCR und der Polarisationsspannung $V_{pol}$ des Bildgebungs-Bolometers (12).

3. Vorrichtung zur Erfassung von elektromagnetischer Strahlung gemäß Anspruch 1, **dadurch gekennzeichnet, dass** der erste und der zweite Widerstand (70, 76) am Substrat thermalisierte Bolometer sind und einen Variationskoeffizienten der Temperaturbeständigkeit ähnlich dem des Bildgebungs- Bolometers (12) aufweisen.

4. Vorrichtung zur Erfassung von elektromagnetischer Strahlung gemäß Anspruch 2 oder 3, **dadurch gekennzeichnet, dass** der Bildgebungs-Bolometer (12) vom Halbleiter-Typ ist, und dass das Steuerungsmodul (68) in der Lage ist, eine Steuerspannung nach der Gleichung zu erzeugen:

$$V_1 = \frac{V_{bolo}^3 \times E_a}{K \times \theta^2}$$

worin $V_1$ die Steueningsspannung ist, $E_a$ ist eine vorher festgelegte Aktivierungsenergie des Bildbungs-Bolometers, K ist die Boltzmann - Konstante und $\theta$ ist eine gemessene oder geschätzte Temperatur des Bildgebungs-Bolometers.

5. Vorrichtung zur Erfassung von elektromagnetischer Strahlung gemäß einem der Ansprüche 3 und 4, **dadurch gekennzeichnet, dass** die Produkte der Widerstände des ersten und des zweiten Widerstandes (70, 76) und der Kondensatorleistung (74) deutlich gleich sind dem Produkt $C_{th} \times R_b^2$, worin $C_{th}$ und $R_b$ jeweils die Wärmeleistung und der elektrische Widerstand des Bildgebungs- Bolometers (12) sind.

6. Vorrichtung zur Erfassung von elektromagnetischer Strahlung gemäß Anspruch 2, **dadurch gekennzeichnet, dass** der Bildgebungs- Bolometer (12) vom Halbleitertyp ist, dass der erste und zweite Widerstand (70, 76) als Wert deutlich den Grenzwiderstand bei unendlicher Temperatur, $R_0$, des Bildgebungs- Bolometer (12) haben und dass das Steuermodul (68) in der Lage ist, eine Steuerspannung nach der Gleichung zu erzeugen:

$$V_1 = \frac{V_{bolo}^3 \times E_a}{K \times \theta^2} \times e^{\frac{-2 \times E_a}{K \times \theta}}$$

worin $V_1$ die Steuerungsspannung ist, $E_a$ eine vorher festgelegte Aktivierungsenergie des Bildgebungs-Bolometers ist, K ist die Boltzmann - Konstante und θ ist eine gemessene oder geschätzte Temperatur des Bildgebungs-Bolometers.

**7.** Vorrichtung zur Erfassung von elektromagnetischer Strahlung gemäß Anspruch 6, **dadurch gekennzeichnet, dass** die Produkte der Widerstände des ersten und des zweiten Widerstandes (70, 76) und der Kondensatorleistung (74) deutlich gleich sind dem Produkt $C_{th}$ x $R^2_0$, worin $C_{th}$ und $R_0$ jeweils die Wärmeleistung und der elektrische Widerstand des Bildgebungs- Bolometers (12) sind.

**8.** Vorrichtung zur Erfassung von elektromagnetischer Strahlung gemäß einem der Ansprüche 4 bis 7, **dadurch gekennzeichnet, dass** die Temperatur θ eine Messung der Substrattemperatur ist.

**9.** Bolometrischer Detektor, der ein Substrat, eine Bildgebungs-Bolometer- (12) - Matrix (50) für elektromagnetische Strahlung umfasst, jeder der Bildgebungs-Bolometer (12) umfasst eine Membran, aufgehängt über dem Substrat und jeder der Bildgebungs-Bolometer (12) ist verbunden mit:

• einem Vorspannungs-Schaltkreis (22), der in der Lage ist, der Bolometer unter einer vorher festgelegten Vorspannung zu polarisieren;
• einem Unterdrückungs-Schaltkreis (62, 64, 66, 68), der in der Lage ist, einen Gleichtaktstrom zu erzeugen, wobei der Unterdrückungs-Schaltkreis (62, 64, 66, 68) einen Ausgleichs- Bolometer (62), thermalisiert mit dem Substrat und einen Vorspannungs-Schaltkreis (64) des Ausgleichs-Bolometers (62) ; und
• einem Messchaltkreis (14, 16, 18), der in der Lage ist, die Differenz zwischen dem im Bildgebungs- Bolometer (12) bei seiner Polarisierung fließenden Strom und dem vom Unterdrückungs-Schaltkreis (62, 64, 66, 68) erzeugten Gleichtaktstrom zu messen,

**dadurch gekennzeichnet, dass** der Unterdrückungs-Schaltkreis irgendeiner der vorhergehenden Ansprüche entspricht.

**10.** Detektor gemäß Anspruch 9, **dadurch gekennzeichnet, dass** jede Säule der Bildgebungs-Bolometer der Matrix (50) mit einem einzigen Unterdrückungs-Schaltkreis (62, 64, 66, 68) verbunden ist.

**11.** Detektor gemäß Anspruch 10, **dadurch gekennzeichnet, dass** er einen einzigen Unterdrückungs-Schaltkreis (62, 64, 66, 68) sowie einen Stromspiegel, verbunden mit jeder Säule der Bildgebungs-Bolometer der Matrix (50) zur Spiegelung des vom Unterdrückungs-Schaltkreis (62, 64, 66, 68) gelieferten Stromes umfasst.

**Claims**

**1.** A device for the detection of an electromagnetic radiation including:

■ a substrate;
■ a resistive imaging bolometer (12), comprising a bolometric membrane suspended above the substrate;
■ a circuit (22) for polarizing the imaging bolometer and capable of polarizing it at a predetermined polarization voltage;
■ a rejection circuit (62, 64, 66, 68) capable of generating a common mode current, the rejection circuit comprising a compensation bolometer (62) thermalized in the substrate and a circuit (64) for polarizing the compensation bolometer; and
■ a measuring circuit (14, 16, 18) capable of being connected to the imaging bolometer (12) and to the rejection circuit (62, 64, 66, 68) in order to measure the difference between the current flowing in the imaging bolometer (12) when it is polarized and the common mode current generated by the rejection circuit (62, 64, 66, 68),

**wherein** the rejection circuit (62, 64, 66, 68) further comprises a current generator (66, 68) capable of producing a current that simulates the current induced by the self-heating of the imaging bolometer (12) under the effect of its polarization, the sum of the current passing through the compensation bolometer (62) and the current generated by the current generator (66, 68) forming the common mode current, and

**wherein** the current generator (66, 68) is capable of producing a current based on a model of the current induced by the self-heating in accordance with the relation:

$$\Delta i(t) = \frac{|TCR| \times V^3_{bolo}}{C_{th} \times R^2_b} t$$

where $\Delta i$ is the variation in the current induced by the self-heating during a period of time $t$, $TCR$ is the temperature coefficient of resistance variation of the imaging bolometer, $C_{th}$ is the thermal capacity of the imaging bolometer, $R_b$ is the resistance of the imaging bolometer, and $V_{bolo}$ is the voltage at the terminals of the imaging bolometer.

**2.** The device for the detection of an electromagnetic radiation as claimed in claim 1, **wherein** the current generator (66, 68) comprises:

a current generation module (66) including:

    ○ a first resistance (70);
    ○ a circuit (72) for polarizing the first resistance capable of polarizing it according to a drive voltage ($V_1$) received on an input terminal;
    ○ a capacitor (74) connected to the first resistance (70) so as to be charged by the current passing through said resistance;
    ○ a switch (80) for resetting the charge of the capacitor;
    ○ a second resistance (76); and
    ○ a circuit (78) for polarizing the second resistance (76), capable of polarizing it according to the voltage at the terminals of the capacitor (74), the current passing through the second resistance (76) forming the output current of the current generator (66, 68),

and a voltage module (68) generating a drive voltage ($V_1$) of the circuit (72) for polarizing the first resistance (70) as a function of the *TCR* and of the polarization voltage $V_{pol}$ of the imaging bolometer (12).

3. The device for the detection of an electromagnetic radiation as claimed in claim 1, *wherein* the first and second resistances (70, 76) are bolometers thermalized in the substrate and have a temperature coefficient of resistance variation similar to that of the imaging bolometer (12).

4. The device for the detection of an electromagnetic radiation as claimed in claim 2 or 3, *wherein* the imaging bolometer (12) is of the semi-conductor type, and wherein the drive module (68) is capable of generating a drive voltage in accordance with the relation:

$$V_1 = \frac{V_{bolo}^3 \times E_a}{K \times \theta^2}$$

where $V_1$ is the drive voltage, $E_a$ is a predetermined activation energy of the imaging bolometer, $K$ is the Boltzmann constant, and $\theta$ is a measured or estimated temperature of the imaging bolometer.

5. The device for the detection of an electromagnetic radiation as claimed in one of claims 3 and 4, *wherein* the product of the resistances of the first and second resistances (70, 76) and of the capacity of the capacitor (74) is substantially equal to the product $C_{th} \times R_b^2$, where $C_{th}$ and $R_b$ are the thermal capacity and electrical resistance respectively of the imaging bolometer.

6. The device for the detection of an electromagnetic radiation as claimed in claim 2, *wherein* the imaging bolometer (12) is of the semi-conductor type, wherein the value of the first and second resistances (70, 76) is substantially the limit resistance at infinite temperature $R_0$ of the imaging bolometer (12), and wherein the drive module (68) is capable of generating a drive voltage in accordance with the relation:

$$V_1 = \frac{V_{bolo}^3 \times E_a}{K \times \theta^2} \times e^{\frac{-2 \times E_a}{K \times \theta}}$$

where $V_1$ is the drive voltage, $E_a$ is a predetermined activation energy of the imaging bolometer, K is the Boltzmann constant, and $\theta$ is a measured or estimated temperature of the imaging bolometer.

7. The device for the detection of an electromagnetic radiation as claimed in claim 6, *wherein* the product of the resistances of the first and second resistances (70, 76) and of the capacity of the capacitor (74) is substantially equal to the product $C_{th} \times R_0^2$ where $C_{th}$ and $R_0$ are the thermal capacity and the electrical resistance at infinite temperature respectively of the imaging bolometer.

8. The device for the detection of an electromagnetic radiation as claimed in one of claims 4 to 7, *wherein* the temperature $\theta$ is a measurement of the temperature of the substrate.

9. A bolometric detector comprising a substrate, an array (50) of electromagnetic radiation imaging bolometers (12), each of the imaging bolometers (12) comprising a membrane suspended above the substrate and each of the imaging bolometers (12) being associated with:

a polarization circuit (22) capable of polarizing said bolometer at a predetermined polarization voltage;
a rejection circuit (62, 64, 66, 68) capable of generating a common mode current, the rejection circuit (62, 64, 66, 68) comprising a compensation bolometer (62) thermalized in the substrate and a circuit (64) for polarizing the compensation bolometer (62);
and a measuring circuit (14, 16, 18) capable of measuring the difference between the current flowing in the imaging bolometer (12) when it is polarized and the common mode current generated by the rejection circuit (62, 64, 66, 68),

*wherein* the rejection circuit complies with any one of the previous claims.

10. The detector as claimed in claim 9, *wherein* each column of imaging bolometers in the array (50) is associated with a single rejection circuit (62, 64, 66, 68).

11. The detector as claimed in claim 10, **wherein** it includes a single rejection circuit (62, 64, 66, 68), and a current mirror associated with each column of imaging bolometers in the array (50) in order to copy the current delivered by the rejection circuit (62, 64, 66, 68).

**Fig. 1**

**Fig. 2**

**Fig. 3**

**Fig. 4**

**Fig. 5**

## RÉFÉRENCES CITÉES DANS LA DESCRIPTION

**Documents brevets cités dans la description**

- EP 1211888 A
- US 20030160171 A
- US 5756999 A

- US 20020074499 A
- EP 2012101 A

**Littérature non-brevet citée dans la description**

- **YUTAKA TANAKE et al.** Performance of 320x240 Uncooled Bolometer-type Infrared Focal Plane Arrays. *Proc. SPIE,* vol. 5074